Europäisches Patentamt

European Patent Office

Office européen des brevets

(19)

(11) EP 0 730 362 A2

(12) EUROPÄISCHE PATENTANMELDUNG

(43) Veröffentlichungstag:
04.09.1996 Patentblatt 1996/36

(51) Int. Cl.⁶: H04L 12/56, H04Q 11/04

(21) Anmeldenummer: 96102986.5

(22) Anmeldetag: 28.02.1996

(84) Benannte Vertragsstaaten:
AT BE CH DE ES FR GB IT LI SE

(30) Priorität: 03.03.1995 DE 19507570

(71) Anmelder: SIEMENS AKTIENGESELLSCHAFT
80333 München (DE)

(72) Erfinder:
• Riedel, Michael, Dipl.-Ing.
01157 Dresden (DE)
• Heiss, Herbert, Dr.-Ing.
82110 Germering (DE)

(54) **Verfahren und Schaltungsanordnung zum Weiterleiten von über eine ATM-Kommunikationseinrichtung übertragenen Nachrichtenzellen an eine Abnehmerleitung**

(57) Über die nach einem asynchronen Transfer-Modus arbeitende ATM-Kommunikationseinrichtung (KE) werden im Zuge virtueller Verbindungen Nachrichtenzellen übertragen und an eine für die jeweilige virtuelle Verbindung in Frage kommende Abnehmerleitung (A1,...,An) weitergeleitet. Dabei werden für die jeweilige virtuelle Verbindung im Zuge des Verbindungsaufbaus entsprechend der Verkehrscharakteristik des zu übertragenden Nachrichtenzellenstromes charakteristische Parameter festgelegt. Nach Maßgabe dieser charakteristischen Parameter wird zu jeder über die ATM-Kommunikationseinrichtung übertragenen Nachrichtenzelle für deren Weiterleitung an die in Frage kommende Abnehmerleitung ein Zeitintervall ermittelt. Dabei ist vorgesehen, daß das Zeitintervall für die jeweilige Nachrichtenzelle erst mit der Weiterleitung einer dieser unmittelbar vorangehenden Nachrichtenzelle derselben virtuellen Verbindung ermittelt wird.

FIG 1

EP 0 730 362 A2

**Beschreibung**

Die Erfindung betrifft ein Verfahren und eine Schaltungsanordnung gemäß Oberbegriff des Patentanspruches 1 bzw. des Patentanspruches 6. Ein derartiges Verfahren und eine derartige Schaltungsanordnung sind bereits durch die nicht vorveröffentlichte deutsche Patentanmeldung P 44 34 724.3 vorgeschlagen worden. Bei diesen ist vorgesehen, daß mit jedem Auftreten einer über die ATM-Kommunikationseinrichtung übertragenen Nachrichtenzelle sofort ein Zeitintervall für deren Weiterleitung anhand der für die zugehörige virtuelle Verbindung festgelegten charakteristischen Parameter bestimmt wird. Durch diese sofortige Bestimmung eines Zeitintervalls können jedoch je nach der Verkehrsbelastung und je nach der Anzahl der gegebenenfalls von den einzelnen Nachrichtenzellen zu durchlaufenden Warteschlangen Jitter bezüglich der Einhaltung der einzelnen charakteristischen Parameter auftreten.

Es ist nun Aufgabe der vorliegenden Erfindung, einen Weg zu zeigen, wie ein Verfahren und eine Schaltungsanordnung gemäß Oberbegriff des Patentanspruches 1 bzw. des Patentanspruches 6 realisiert werden können, um die für einzelne virtuelle Verbindungen festgelegten charakteristischen Parameter garantieren zu können.

Gelöst wird diese Aufgabe bei einem Verfahren gemäß Oberbegriff des Patentanspruches 1 durch die in diesem Patentanspruch angegebenen Verfahrensmerkmale.

Die Erfindung bringt dabei den Vorteil mit sich, daß durch die Bestimmung eines Zeitintervalls für die Weiterleitung einer Nachrichtenzelle erst zum Zeitpunkt des Weiterleitens der dieser unmittelbar vorangehenden Nachrichtenzelle derselben virtuellen Verbindung beispielsweise der minimale zeitliche Abstand zwischen zwei aufeinanderfolgenden Nachrichtenzellen sowie beliebige Zellen-Verzögerungstoleranzen exakt garantiert werden können.

Vorteilhafte Ausgestaltungen des Verfahrens gemäß der vorliegenden Erfindung ergeben sich aus den Patentansprüchen 2 bis 6. Der Vorteil der Ausgestaltungen gemäß den Patentansprüchen 2 und 3 besteht dabei darin, daß für die Ermittlung der Zeitintervalle für weiterzuleitende Nachrichtenzellen die Anzahl der für die jeweilige virtuelle Verbindung zu führenden Ermittlungsgrößen minimiert ist und keine systembedingten Größen zu berücksichtigen sind. Andererseits besteht der Vorteil der Ausgestaltungen gemäß den Patentansprüchen 4 und 5 darin, daß pro virtueller Verbindung lediglich eine Referenz geführt ist und jede Referenz eine tatsächlich weiterzuleitende Nachrichtenzelle repräsentiert, so daß der Verwaltungsaufwand für die einzelnen virtuellen Verbindungen minimiert ist. Schließlich bringt die Ausgestaltung gemäß Patentspruch 6 den Vorteil einer Minimierung der Zeittabellen und damit einer Minimierung des Speicherbedarfs sowie den Vorteil der Möglichkeit einer exakten Dimensionierung dieser Zeittabellen mit sich.

Die vorstehend aufgezeigte Aufgabe wird bei einer Schaltungsanordnung gemäß Patentanspruch 7 durch die in diesem Patentanspruch angegebenen schaltungstechnischen Merkmale gelöst. Der Vorteil dieser Schaltungsanordnung besteht dabei darin, daß die Ermittlung eines Zeitintervalls für eine weiterleitende Nachrichtenzelle zum Zeitpunkt des Weiterleitens der dieser unmittelbar vorangehenden Nachrichtenzelle derselben Verbindung ausschließlich in einer der jeweiligen Abnehmerleitung zugeordneten Behandlungseinrichtung erfolgt, so daß von derartigen Ermittlungsaufgaben die zugehörige ATM-Kommunikationseinrichtung entlastet ist.

In folgenden wird nun die vorliegende Erfindung anhand von Zeichnungen beispielsweise näher erläutert.

FIG 1       zeigt in schematischer Form eine Kommunikationseinrichtung, bei der die vorliegende Erfindung angewandt ist,

FIG 2       zeigt einen möglichen Aufbau einer der in FIG 1 lediglich schematisch dargestellten Behandlungseinrichtungen und

FIG 3 und 4       zeigen Flußdiagramme, auf welche im folgenden naher eingegangen wird.

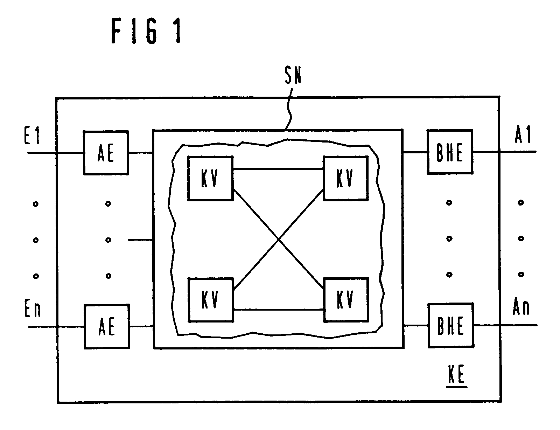

In FIG 1 ist eine nach einem asynchronen Transfermodus arbeitende ATM-Kommunikationseinrichtung KE schematisch dargestellt, an welche eine Mehrzahl von Zubringerleitungen E1,...,En sowie eine Mehrzahl von Abnehmerleitungsanordnung A1,...,An angeschlossen sind. Von diesen sind in FIG 1 lediglich die Zubringerleitungen E1,...,En und die Abnehmerleitungsanordnungen A1,...,An angegeben. Auf den Zubringerleitungen und Abnehmerleitunganordnungen erfolgt jeweils eine Übertragung von Nachrichtenzellen im Zuge von virtuellen Verbindungen nach einem asynchronen Übertragungsverfahren ("Asynchronous Transfer Mode"). Die Nachrichtenzellen weisen dabei in bekannter Weise eine feste Länge auf und verfügen jeweils neben einem Informationsteil für die Übertragung der eigentlichen Nutzinformationen über einen Zellenkopf, in welchem unter anderem Angaben bezüglich der jeweiligen virtuellen Verbindung bzw. des jeweiligen virtuellen Pfades enthalten sind. Die jeweilige Verbindung möge dabei durch eine sogenannte virtuelle Kanalnummer VCI, ein virtueller Pfad dagegen durch eine sogenannte virtuelle Pfadnummer VPI bezeichnet sein. Die Länge eines solchen Zellenkopfes umfaßt beispielsweise 5 Oktetts. Der genannte Informationsteil ist dagegen aus 48 Oktetts gebildet, um die eigentlichen Nutzinformationen zu übertragen. Unter Nutzinformationen sollen dabei allgemein Nachrichtensignale in digitaler Form verstanden werden, unter welche beispielsweise Nachrichten- und Textsignale sowie Sprach- bzw. Videosignale in digitaler Form fallen. In Übertragungspausen werden im übrigen den Nachrichtenzellen entsprechende Leerzellen übertragen.

Nach FIG 1 sind die Zubringerleitungen E1,...,En über jeweils eine Anschlußeinrichtung AE einer Koppelanordnung SN zugeführt. In diesen Anschlußeinrichtungen erfolgt unter anderem individuell für die einzelnen, über die jeweilige Zubringerleitung geführten virtuellen Verbindungen eine Überprüfung der Einhaltung der für die jeweilige virtuelle Verbindung festgelegten Parameter. Für die Koppelanordnung SN ist im übrigen in FIG 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benutzt sein. Da der Aufbau und die Wirkungsweise derartiger Koppelanordnungen für die Weiterleitung von Nachrichtenzellen bekannt ist, wird im folgenden darauf nicht näher eingegangen. Außerdem wird auf eine nähere Erläuterung des Aufbaus und der Wirkungsweise der Anschlußeinrichtungen AE verzichtet, da deren Ausgestaltung nicht Gegenstand der vorliegenden Erfindung ist und Anordnungen zur Überwachung festgelegter Parameter für die einzelnen virtuellen Verbindungen allgemein bekannt sind.

Gemäß FIG 1 ist den Abnehmerleitungsanordnungen A1,...,An jeweils eine Behandlungseinrichtung BHE zugeordnet, um die im Zuge virtueller Verbindungen über die Koppelanordnung SN geführten Nachrichtenzellen an die jeweilige Ausgangsleitungsanordnung weiterzuleiten. Dabei wird im folgenden davon ausgegangen, daß der jeweiligen Behandlungseinrichtung Nachrichtenzellen zugeführt werden, die virtuellen Verbindungen mit unterschiedlicher Verkehrscharakteristik zugehörig sind. Dabei möge für erste Verbindungen, die im folgenden als RT-Verbindungen ("Real Time"-Verbindungen) bezeichnet werden, jeweils eine maximale Bitrate garantiert werden. Beispiele für derartige RT-Verbindungen sind Sprachverbindungen sowie Video-Konferenzverbindungen. Darüber hinaus mögen sogenannte NRT-Verbindungen ("Non Real Time"-Verbindungen) vorliegen, welche durch eine Spitzenbitrate ("Peak Bit Rate"), eine Obergrenze einer mittleren Bitrate ("Sustainable Bit Rate"), eine Burst-Toleranz sowie durch eine Zellen-Verzögerungstoleranz ("cell delay variation") charakterisiert sein können. Als Beispiele für derartige NRT-Verbindungen seien hier Verbindungen für File-Transfers, Buchungen oder für Mail-Dienste genannt. Die für eine virtuelle Verbindung sich ergebende Verkehrscharakteristik wird dabei im Zuge des Aufbaus der jeweiligen virtuellen Verbindung durch entsprechende Angaben von der diese Verbindung anfordernden Teilnehmereinrichtung angezeigt. Diesen Angaben entsprechende charakteristische Parameter werden in der für die jeweilige virtuelle Verbindung in Frage kommenden Behandlungseinrichtung BHE verbindungsindividuell festgehalten. Darüber hinaus wird davon ausgegangen, daß für die Weiterleitung der Nachrichtenzellen von RT-Verbindungen über die jeweilige Abnehmerleitungsanordnung A1,...,An eine maximale Bitrate reserviert ist und Nachrichtenzellen von NRT-Verbindungen nach einem statistischen Multiplexprinzip weitergeleitet werden. Dieses statistische Multiplexprinzip basiert bekanntlich darauf, daß für die Übertragung von Nachrichtenzellenströmen über eine Koppelanordnung sämtliche verfügbaren Ressourcen ohne Beachtung der ursprünglichen Verkehrscharakteristiken der einzelnen Nachrichtenzellenströme ausgenutzt und diese ursprünglichen Verkehrscharakteristiken nach Durchlauf der Koppelanordnung bei Notwendigkeit wieder rekonstruiert werden.

Für die Weiterleitung von Nachrichtenzellen sind dabei auf der jeweiligen Abnehmerleitungsanordnung periodisch wiederholt auftretende Zeitrahmen mit jeweils einer Mehrzahl von m Zeitschlitzen definiert. Die Zeitdauer eines Zeitschlitzes entspricht dabei der Übertragungszeitdauer einer Nachrichtenzelle auf der jeweiligen Ausgangsleitungsanordnung, d.h. pro Zeitschlitz wird eine Nachrichtenzelle weitergeleitet. Die Zeitdauer eines Zeitschlitzes wird im folgenden auch als Zellenzyklus bezeichnet.

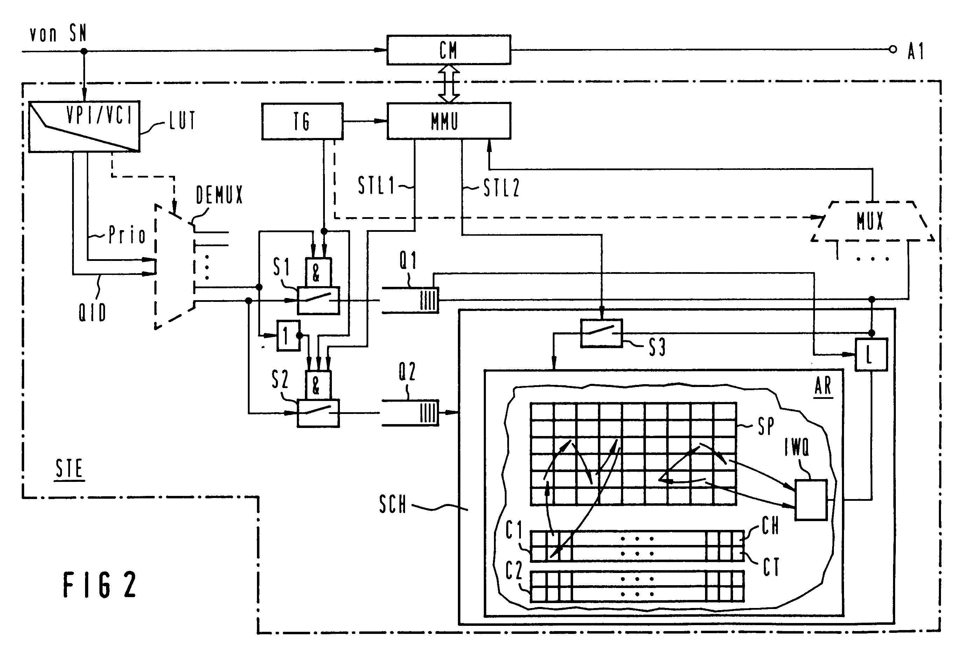

In FIG 2 ist ein möglicher Aufbau der zuvor erwähnten, in gleicher Weise aufgebauten Behandlungseinrichtungen am Beispiel der der Abnehmerleitungsanordnung A1 zugeordneten Behandlungseinrichtung BHE dargestellt. Dabei sind lediglich diejenigen Schaltungsteile angegeben, die für das Verständnis der vorliegenden Erfindung erforderlich sind.

Danach weist die Behandlungseinrichtung BHE in einen ersten Signalzweig einen zentralen Zellen-Speicher CM auf, der eingangsseitig über eine Übertragungsleitung von der in FIG 1 angegebenen Koppelanordnung SN Nachrichtenzellen unterschiedlicher virtueller Verbindungen zugeführt erhält und ausgangsseitig mit der Abnehmerleitungsanordnung A1 in Verbindung steht. In diesem Zellen-Speicher sind verbindungsindividuelle Zellen-Warteschlangen eingerichtet, in welche die über die Abnehmerleitungsanordnung A1 weiterzuleitenden Nachrichtenzellen der jeweiligen virtuellen Verbindung aufgenommen werden. Gesteuert wird der Zellen-Speicher von einer Steuereinrichtung STE her, die mit einer dieser zugehörigen Auswerteeinrichtung LUT an die Nachrichtenzellen führende Übertragungsleitung angeschlossen ist, über welche die Auswerteeinrichtung LUT die in Zellenköpfen eintreffender Nachrichtenzellen enthaltenen Verbindungsinformationen VPI/VCI zugeführt erhält. In dieser Auswerteeinrichtung ist eine Zuordnungstabelle geführt, welche der in dem jeweiligen Zellenkopf enthaltenen Verbindungsinformation VCI/VPI eindeutig eine Warteschlangen-Kennung QID, durch welche die für die Speicherung der gerade vorliegenden Nachrichtenzelle in Frage kommende Zellen-Warteschlange bezeichnet ist, sowie eine Prioritäts-Kennung zuordnet. Bei dem vorliegenden Ausführungsbeispiel ist durch letztere in Form einer 1-Bit-Information angegeben, ob die betreffende Nachrichtenzelle einer RT-Verbindung oder einer NRT-Verbindung zugehörig ist. Diese Auswerteeinrichtung LUT kann dabei als Speicher ausgebildet sein, dessen Speicherzellen durch aus den Verbindungsinformationen abgeleitete Adresseninformationen individuell wahlfrei ansteuerbar sind und in welchen jeweils eine der jeweiligen Verbindungsinformation zugeordnete Warteschlangen-Kennung und zugehörige Prioritäts-Kennung gespeichert sind, die auf eine Ansteuerung hin am Ausgang des Speichers bereitgestellt sind.

Die von der Auswerteeinrichtung LUT nacheinander bereitgestellten Prioritäts-Kennungen sind bei dem vorliegenden Ausführungsbeispiel einem Steuergatter eines elektronischen Schalters S1, die invertierten Prioritäts-Kennungen dagegen einem Steuergatter eines elektronischen Schalters S2 zugeführt. Der Schalter S1 stellt dabei den Eingang eines für RT-Verbindungen vorgesehenen Signalzweiges dar, während der Schalter S2 den Eingang eines für NRT-Verbindungen reservierten Signalzweiges bildet. Die Schaltstrecken dieser Schalter S1 und S2 sind gleichzeitig mit der der jeweiligen Prioritäts-Kennung zugehörigen Warteschlangen-Kennung beaufschlagt, wobei nach Maßgabe der gleichzeitig bereitgestellten Prioritäts-Kennung lediglich einer der Schalter leitend gesteuert ist. Durch einen Taktgeber TG wird dabei mit Hilfe des dem jeweiligen Schalter zugehörigen Steuergatters innerhalb eines oben genannten Zellenzyklus ein Zeitintervall festgelegt, in welchem die jeweilige Prioritäts-Kennung wirksam gesteuert ist. Dem Steuergatter des Schalters S2 ist dabei noch eine weitere Steuerleitung STL1 zugeführt, auf deren Funktion im folgenden noch näher eingegangen wird.

In dem durch den Schalter S1 eingeleiteten Signalzweig für RT-Verbindungen ist eine Referenz-Warteschlange Q1 beispielsweise unter Verwendung eines "First-In-First-Out"-Speichers vorgesehen, in welche die über den Schalter S1 geleiteten Warteschlangen-Kennungen aufgenommen werden. Die maximale Länge dieser Warteschlange ist dabei entsprechend der maximal zulässigen Verzögerungszeit für Nachrichtenzellen von RT-Verbindungen festgelegt. Die in diese Referenz-Warteschlange aufgenommenen Warteschlangen-Kennungen werden anschließend nacheinander einer der Steuereinrichtung STE zugehörigen Speichersteuereinrichtung MMU zugeführt, die an den Zellenspeicher CM diesen Warteschlangen-Kennungen entsprechende Adressensignale abgibt, um jeweils eine in der in Frage kommenden Zellen-Warteschlange anstehende Nachrichtenzelle an die Abnehmerleitungsanordnung A1 weiterzuleiten. Die jeweilige Nachrichtenzelle wird dabei in einen oben bereits erwähnten Zeitschlitz eines Zeitrahmens eingefügt.

In dem durch den Schalter S2 eingeleiteten Signalzweig für NRT-Verbindungen ist eine Referenz-Warteschlange Q2 vorgesehen, welche lediglich dazu dient, den Arbeitstakt einer der Referenz-Warteschlange nachgeschalteten Bearbeitungseinrichtung SCH von dem Übertragungstakt für die auftretenden Nachrichtenzellen zu entkoppeln. Diese Bearbeitungseinrichtung ermittelt anhand der zugeführten Warteschlangen-Kennungen sowie der oben genannten, zur Verfügung stehenden charakteristischen Parameter für die jeweilige NRT-Verbindung die Zeitpunkte für die Abgabe der in dem Zellen-Speicher CM für die jeweilige NRT-Verbindung gespeicherten Nachrichtenzellen, um die für die jeweilige NRT-Verbindung festgelegte Verkehrscharakteristik für die Weiterleitung der Nachrichtenzellen zu rekonstruieren. Ein solches Rekonstruieren kann dabei darin bestehen, daß bei der Abgabe aufeinanderfolgender Nachrichtenzellen derselben NRT-Verbindung ein durch eine Spitzenbitrate festgelegter zeitlicher Abstand nicht unterschritten wird, was einer "Spacing"-Funktion entspricht, oder der zeitliche Abstand aufeinanderfolgender Nachrichtenzellen so festgelegt wird, daß sämtliche oben angegebene charakteristischen Parameter für die einzelnen NRT-Verbindungen erfüllt werden. Letzteres wird auch als "Shaping" bezeichnet. Ein Beispiel dafür wird im folgenden noch näher beschrieben.

Im übrigen kann anstelle der Bearbeitungseinrichtung SCH und der Referenz-Warteschlange Q2 im einfachsten Fall auch ein dem "First-In-First-Out"-Speicher Q1 entsprechender "First-In-First-Out"-Speicher vorgesehen sein, wenn ein Rekonstruieren der Nachrichtenzellenströme von NRT-Verbindungen nicht vorgesehen ist, sondern lediglich Nachrichtenzellen von NRT-Verbindungen mit einer niedrigeren Priorität gegenüber Nachrichtenzellenströmen von RT-Verbindungen weitergeleitet werden sollen.

Unabhängig von der Ausbildung des für NRT-Verbindungen vorgesehenen Signalzweiges ist bei dem vorliegenden Ausführungsbeispiel vorgesehen, daß in diesem Signalzweig vorliegende Warteschlangen-Kennungen nur dann an die Speichersteuereinrichtung MMU weitergeleitet werden, wenn die dem Signalzweig für RT-Verbindungen zugehörige Referenz-Warteschlange Q1 leer ist, d.h. RT-Verbindungen wird eine höhere Priorität zugeordnet. Bei dem vorliegenden Ausführungsbeispiel sind die Ausgänge der beiden Signalzweige für RT- und NRT-Verbindungen zusammengeführt, wobei der Ausgang des Signalzweiges für NRT-Verbindungen lediglich bei leerer Referenz-Warteschlange Q1 freigegeben, anderenfalls dagegen hochohmig gesteuert ist. Hierfür ist der Signalzweig für NRT-Verbindungen mit einem Register L abgeschlossen, welches ausgangsseitig durch ein von der Referenz-Warteschlange Q1 abgegebenes Steuersignal hochohmig steuerbar ist. Dieses Steuersignal wird immer dann abgegeben, wenn in dieser Referenz-Warteschlange zumindest noch eine Warteschlangen-Kennung enthalten ist.

In FIG 2 sind noch ein zwischen der Auswerteeinrichtung LUT und den Schaltern S1 und S2 liegender Demultiplexer DEMUX sowie ein zwischen dem gemeinsamen Ausgang der Signalzweige für RT-und NRT-Verbindungen und der Speichersteuereinrichtung MMU liegender Multiplexer MUX dargestellt. Diese sind fakultativ dann einsetzbar, wenn die Abnehmerleitungsanordnung A1 aus einem Bündel paralleler Einzelleitungen besteht und über diese individuell festgelegte virtuelle Verbindungen geführt werden sollen. In diesem Falle ist für jede dieser Einzelleitungen individuell ein Signalzweig für RT-Verbindungen und ein Signalzweig für NRT-Verbindungen in der zuvor beschriebenen Weise zugeordnet. Die den einzelnen Einzelleitungen zugehörigen Signalzweige sind dabei jeweils über ihre Schalter S1 und S2 an einen festgelegten Ausgang des Demultiplexers DEMUX und mit ihrem gemeinsamen Ausgang an einen festgelegten Eingang des Multiplexers MUX angeschlossen. In der oben genannten Zuordnungstabelle der Auswerteeinrichtung LUT ist zusätzlich jeder Verbindungsinformation VCI/VPI eine Angabe bezüglich der für die jeweilige Verbindung in Frage kommenden Einzelleitung zugeordnet, welche zusammen mit der zugehörigen Warteschlangen-Kennung und Prioritäts-Kennung am Ausgang der Auswerteeinrichtung LUT bereitgestellt und dem Demultiplexer DEMUX als Steuersignal zugeführt ist. Die gemeinsamen Ausgänge der den Einzelleitungen individuell zugehörigen Signalzweige werden über den Multiplexer MUX nacheinander innerhalb eines Zellenzyklus mit der Speichersteuereinrichtung MMU verbunden. Hierfür erhält der Multiplexer von dem zuvor genannten Taktgenerator TG entsprechende Steuersignale zugeführt.

Bezüglich der zuvor anhand der Fig.2 beschriebenen Behandlungseinrichtung BHE sei noch darauf hingewiesen, daß lediglich als Beispiel die Behandlung zweier unterschiedlicher Verbindungsarten, nämlich die Behandlung von RT- und NRT-Verbindungen, beschrieben worden ist. Bei einer Modifizierung der zuvor beschriebenen Zuordnungstabelle und Hinzufügen weiterer prioritätsindividueller Signalzweige ist mit einer solchen Behandlungseinrichtung auch eine beliebige Anzahl unterschiedlicher Verbindungsarten prioritätsabhängig behandelbar.

Darüber hinaus sei noch darauf hingewiesen, daß den zuvor beschriebenen Behandlungseinrichtungen BHE entsprechende Behandlungseinrichtungen zwischen den oben genannten Anschlußeinrichtungen AE und der Koppelanordnung SN geschaltet sein können, um die über diese Koppelanordnung zu übertragenden Nachrichtenzellen zuächst zwischenzuspeichern. In diesem Falle können die Behandlungseinrichtungen jeweils eine Bearbeitungseinrichtung SCH enthalten, welche beispielsweise derart ausgebildet ist, daß Nachrichtenzelle von NRT-Verbindungen nach einem oben bereits erwähnten "First-In-First-Out"-Prinzip oder nach einem sogenannten "Round Robin"-Prinzip weitergeleitet werden.

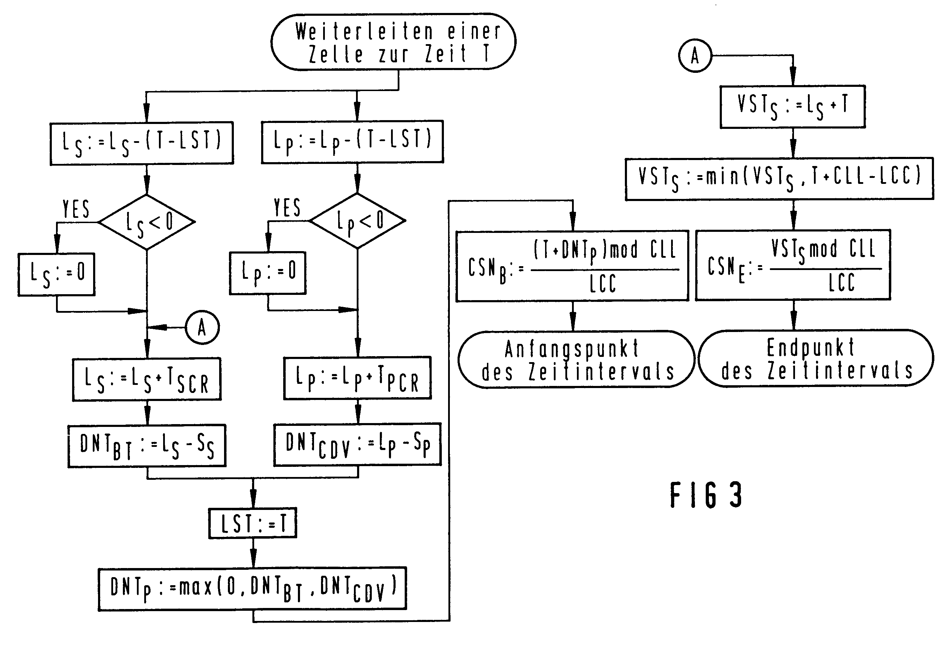

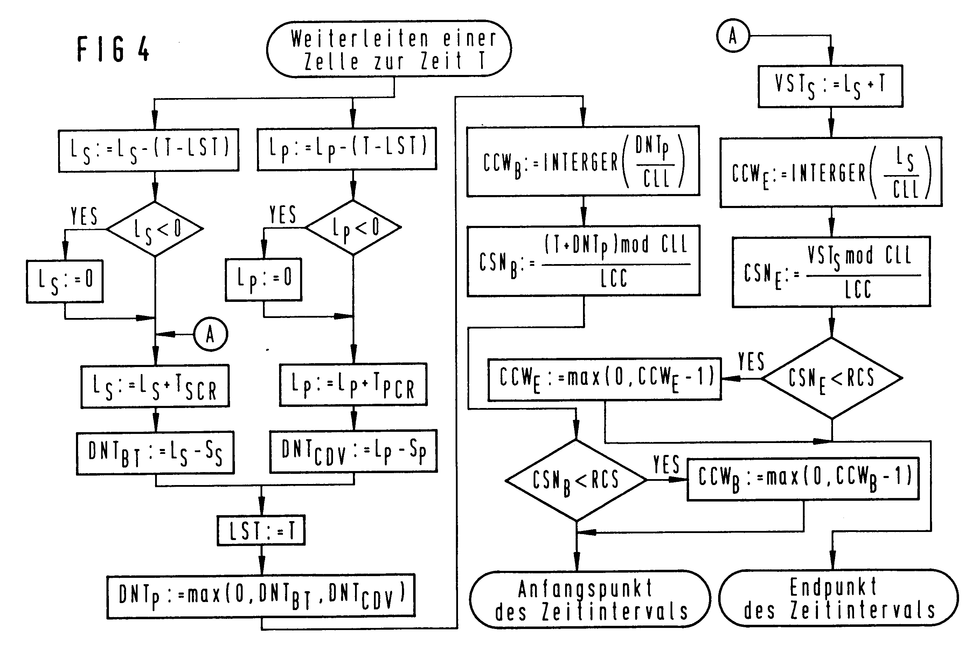

Im folgenden wird nun anhand der in den Figuren 3 und 4 dargestellten Flußdiagramme ein Beispiel für die oben bereits erwähnte Ermittlung der Abgabezeitpunkte von NRT-Verbindungen zugehörigen Nachrichtenzellen durch die Bearbeitungseinrichtung SCH beschrieben. Dabei wird als Beispiel davon ausgegangen, daß für die jeweilige NRT-Verbindung die charakteristischen Parameter Spitzenbitrate PCR ("peak bit rate"), Obergrenze der mittleren Bitrate SCR ("sustainable bit rate"), Bursttoleranz BT und Zellen-Verzögerungstoleranz CDV ("cell delay variation") rekonstruiert werden sollen.

Die Bearbeitungseinrichtung SCH weist, wie in Fig. 2 dargestellt, eine Speichereinrichtung SP auf, in welcher für jede der über die zugehörige Abnehmerleitungsanordnung A1 verlaufenden NRT-Verbindung und damit für jede der Zellen-Warteschlangen des Zellen-Speichers CM ein Speicherbereich vorgesehen ist. In diesen Speicherbereichen, die wahlfrei nach Maßgabe der der Bearbeitungseinrichtung SCH zugeführten Warteschlangen-Kennungen ansteuerbar sind, sind jeweils Warteschlangen-Kennungen für mögliche, noch zu erläuternde Vorgänger und/oder Nachfolger sowie zwei Leaky-Bucket-Parametersätze gespeichert, nämlich ein erster, der Obergrenze der mittleren Bitrate SCR und der Bursttoleranz BT zugeordneter Leaky-Bucket-Parametersatz LB1 und ein zweiter, der Spitzenbitrate PCR und der Zellen-Verzögerungstoleranz CDV zugeordneter Leaky-Bucket-Parametersatz LB2. LB1 enthält dabei einen momentanen Leaky-Bucket-Füllstandswert $L_s$, einen von der Bursttoleranz BT abhängigen Maximalwert des Leaky-Buckets $S_s$ sowie einen Zeitwert $T_{SCR}$, durch welchen der Zeitabstand zweier aufeinander folgender Nachrichtenzellen unter Berücksichtigung der Obergrenze der mittleren Bitrate SCR festgelegt ist. In entsprechender Weise enthält der Leaky-Bucket-Parametersatz LB2 einen momentanen Leaky-Bucket-Füllstandswert $L_p$, einen von der Zellen-Verzögerungstoleranz CDV abhängigen Maximalwert des Leaky-Buckets $S_p$ sowie einen Zeitwert $T_{PCR}$, durch welchen der Zeitabstand zweier aufeinander folgender Nachrichtenzellen unter Berücksichtigung der Spitzenbitrate PCR festgelegt ist. Außerdem ist für LB1 und LB2 gemeinsam ein Zeitwert LST festgehalten, der den letzten Bearbeitungszeitpunkt für eine Nachrichtenzelle der jeweiligen NRT-Verbindung angibt. Darüber hinaus sind in der Speichereinrichtung SP global zwei Systemparameter CLL und LCC gespeichert, wobei CLL der oben genannten Anzahl m von Zeitschlitzen innerhalb eines Zeitrahmens auf der Abnehmerleitungsanordnung A1, LCC dagegen der Zeitdauer eines solchen Zeitschlitzes entspricht. Die Werte $S_s$, $S_p$, $T_{SCR}$ und $T_{PCR}$ werden im übrigen der Bearbeitungseinrichtung SCH im Zuge des Aufbaus der jeweiligen NRT-Verbindung von einer der Koppelanordnung SN zugehörigen, in Fig.1 nicht dargestellten Steuereinrichtung her zugeführt. Da dieses Zuführen nicht Gegenstand der vorliegenden Erfindung ist, wird darauf nicht näher eingegangen.

Wie im folgenden noch anhand der Figuren 3 und 4 erläutert wird, wird bei dem vorliegenden Ausführungsbeispiel nach Maßgabe der gerade beschriebenen Leaky-Bucket-Parametersätze mit jedem Weiterleiten einer in dem Zellen-Speicher CM gespeicherten Nachrichtenzelle an die Abnehmerleitungsanordnung A1 durch eine der Bearbeitungseinrichtung SCH zugehörige Arithmetikeinrichtung AR für eine dieser Nachrichtenzelle unmittelbar nachfolgende Nachrichtenzelle derselben NRT-Verbindung und damit derselben Zellen-Warteschlange ein Zeitintervall bestimmt, in welchem die betreffende Nachrichtenzelle weiterzuleiten ist. Intervallanfang und Intervallende eines solchen Zeitintervalls sind jeweils durch einen der Zeitschlitze eines oben erwähnten Zeitrahmens repräsentiert. Den Intervallanfängen der für die einzelnen weiterzuleitenden Nachrichtenzellen ermittelten Zeitintervalle ist dabei eine erste Zeittabelle C1 ("calendar"), den Intervallenden dagegen eine zweite Zeittabelle C2 zugeordnet. Diese Zeittabellen verfügen jeweils über eine Anzahl von Speicherelementen, die der Anzahl m von Zeitschlitzen eines oben genannten Zeitrahmens entspricht. Für die einzelnen Speicherelemente der Zeittabellen wird dabei, wie in Fig.2 angedeutet, jeweils eine Ausleseliste ("chain") geführt, in welcher die für den jeweiligen Zeitschlitz und damit für das jeweilige Speicherelement bestimmten Warteschlangen-Kennungen mit Hilfe der für diese in der Speichereinrichtung SP gespeicherten Zeiger miteinander verkettet sind. Eine solche Ausleseliste ist durch einen Anfangs-Zeiger CH (Warteschlangen-Kennung) und durch einen End-Zeiger CT gekennzeichnet, die in dem zugeordneten Speicherelement gespeichert sind.

In der Arithmetikeinrichtung AR ist eine der Anzahl m der in den Zeittabellen jeweils vorhandenen Speicherelemente entsprechende Modulo-m-Zähleinrichtung vorhanden, deren momentaner Zählerstand die aktuelle Teit T anzeigt und mit jedem Beginn eines Zellenzyklus um den Wert "1" inkrementiert wird. Nach Maßgabe dieses momentanen Zählerstandes werden die Zeittabellen angesteuert, um die der aktuellen Zeit T zugeordneten Anfangs- und End-Zeiger CH und CT auszulesen. Für den Fall, daß durch diese Zeiger das Vorhandensein zumindest einer Warteschlangen-Kennung in der Ausleseliste und damit zumindest einer in einer Zellen-Warteschlange des Zellenspeichers CM gespeicherten Nachrichtenzelle angezeigt ist, wird die in Frage kommende Ausleseliste in eine nach dem "First-In-First-Out"-Prinzip arbeitende Ausgangs-Warteschlange IWQ eingefügt. Aus dieser wird pro Zeitschlitz eine Warteschlangen-Kennung an die in Fig.2 dargestellte Speichersteuereinrichtung MMU weitergeleitet, um aus der durch diese bezeichneten Zellen-Warteschlange des Zellen-Speichers CM eine Nachrichtenzelle in der oben angegebenen Weise an die Abnehmerleitungsanordnung A1 weiterzuleiten, und zwar dann, wenn die den RT-Verbindungen zugeordnete Referenz-Warteschlange Q1 (Fig.2) leer ist. Dabei haben die Ausleselisten der Zeittabelle C2 Priorität gegenüber den Ausleselisten der Zeittabelle C1, d.h. eine Ausleseliste der Zeittabelle C1 wird nur bei leerer Ausgangs-Warteschlange in diese eingefügt. Im übrigen wird eine Ausleseliste nach deren Einfügen in die Ausgangs-Warteschlange in der zugehörigen Zeittabelle zunächst als leer gekennzeichnet, bis neue Einträge für einen nachfolgenden Zeitrahmen erfolgen. Darüber hinaus werden die in der betreffenden Ausleseliste geführten Warteschlangen-Kennungen aus der in Frage kommenden Ausleseliste bzw. Ausleselisten der verbleibenden Zeittabelle entfernt, d.h. ausgekettet.

Bei dem vorliegenden Ausführungsbeispiel ist vorgesehen, daß in der Speichereinrichtung SP und damit in den Zeittabellen C1 und C2 pro Zellen-Warteschlange des Zellen-Speichers CM höchstens eine Referenz enthalten ist. Dies wird nach Fig.2 dadurch erreicht, daß lediglich bei Aufnahme einer Nachrichtenzelle in eine leere Zellen-Warteschlange des Zellen-Speichers CM von der Speichersteuereinrichtung MMU über die Steuerleitung STL1 ein Steuersignal abgegeben wird, durch welches die zugehörige Warteschlangen-Kennung über den Schalter S2 und die Referenz-Warteschlange Q2 an die Bearbeitungseinrichtung SCH für eine Bearbeitung, d.h. für eine Ermittlung des Abgabezeitpunktes, weitergeleitet wird. Dies erfolgt beispielsweise unmittelbar nach dem Aufbau einer NRT-Verbindung bzw. immer dann, wenn für die jeweilige NRT-Verbindung längere Zeit keine Nachrichtenzelle eingetroffen ist.

Bei Aufnahme einer Nachrichtenzelle in eine bereits zumindest mit einer Nachrichtenzelle gefüllte Zellen-Warteschlange ist dagegen der Schalter S2 durch ein entsprechendes Steuersignal auf der Steuerleitung STL1 gesperrt, so daß die zugehörige Warteschlangen-Kennung vernichtet wird. In diesem Falle wird jedoch mit der Abgabe einer Warteschlangen-Kennung an die Speichersteuereinrichtung MMU und damit mit der Weiterleitung einer dieser Warteschlangen-Kennung zugeordneten Nachrichtenzelle an die Abnehmerleitungsanordnung A1 eine Kopie der betreffenden Warteschlangen-Kennung der Arithmetikeinrichtung AR zurückgeführt, durch welche dann auf der Basis der gerade vorliegenden aktuellen Zeit T der Warteschlangen-Kennung eine neue Abgabezeit in der oben angegebenen Weise zugeordnet wird. Dafür ist von dem Ausgang des in Fig.2 dargestellten Registers L eine Rückführleitung zu der Arithmetikeinrichtung AR geführt, welche über einen Schalter S3 lediglich bei Abgabe einer Nachrichtenzelle an die Abnehmerleitungsanordnung A1 und einer verbleibenden gefüllten Zellen-Warteschlange aktiviert ist. Gesteuert wird dieser Schalter über eine Steuerleitung STL2 von der Speichersteuereinrichtung MMU her.

Nach der generellen Beschreibung der Ermittlung des Abgabezeitpunktes für in den Zellen-Speicher CM aufgenommene Nachrichtenzellen wird nunmehr zunächst anhand des Flußdiagrammes in Fig.3 näher auf diese Ermittlung nach Maßgabe der oben erwähnten Leaky-Bucket-Parameter durch die Arithmetikeinrichtung AR eingegangen.

Die Leaky-Bucket-Füllstandswerte $L_s$ und $L_p$ repräsentieren die Zeiten, nach deren Ablauf die zugeordnete Zellen-Warteschlange des Zellen-Speichers CM über die Abnehmerleitungsanordnung A1 entleert sein würde, wenn diese Zellen-Warteschlange hypothetisch mit genau der Obergrenze der mittleren Bitrate bzw. der Spitzenbitrate bedient worden wäre. Im linken Zweig des Flußdiagrammes, welcher die Abläufe des der Obergrenze der mittleren Bitrate SCR und der Bursttoleranz BT zugeordneten Leaky-Buckets wiedergibt, wird zunächst zum aktuellen Zeitpunkt T der Abgabe einer Nachrichtenzelle an die Abnehmerleitungsanordnung A1 der Leaky-Bucket-Füllstandswert $L_s$ um einen Wert (T-LST) dekrementiert, der der Abflußmenge von Nachrichtenzellen aus der zugeordneten Zellen-Warteschlange im Zeitintervall zwischen dem letzten Bearbeitungszeitpunkt LST einer Nachrichtenzelle und der aktuellen Zeit T entspricht, wenn Nachrichtenzellen mit der Obergrenze der mittleren Bitrate (SCR) übertragen worden wären. Dabei wird überprüft, ob der daraus resultierende Wert für $L_s$ negativ ist. Ist dies der Fall, so wird $L_s$ auf den Wert = "0" gesetzt, d.h. es wird nur ein Wert "0" oder ein positiver Wert zugelassen. Der daraus resultierende Wert für $L_s$ wird dann um den Zeitwert $T_{SCR}$ inkrementiert, durch welchen, wie oben bereits erwähnt, der Zeitabstand zwischen zwei aufeinander folgenden Nachrichtenzellen der- selben NRT-Verbindung unter Berücksichtigung der Obergrenze der mittleren Bitrate SCR festgelegt ist. Anschließend wird der aktuelle Wert $L_s$ für eine nachfolgende Ermittlung festgehalten und zusätzlich durch Subtraktion des Maximalwertes des Leaky-Buckets $S_s$ von diesem Wert $L_s$ eine Verzögerungszeit $DNT_{BT}$ gewonnen. Auch hierbei wird diese Verzögerungszeit auf den Wert "0" gesetzt, falls sich für die Verzögerungszeit ein negativer Wert ergibt.

Im mittleren Zweig des Flußdiagrammes, welcher die Abläufe des der Spitzenbitrate PCR und der Zellen-Verzögerungstoleranz CDV zugeordneten Leaky-Buckets wiedergibt, wird in entsprechender Weise eine Verzögerungszeit $DNT_{CDV}$ ermittelt, lediglich mit dem Unterschied, daß hier der Leaky-Bucket-Füllstandswert $L_p$, der Maximalwert $S_p$ sowie ein Zeitwert $T_{PCR}$ herangezogen werden. Durch letzteren ist dabei, wie oben bereits erwähnt, der Zeitabstand zwischen zwei aufeinander folgenden Nachrichtenzellen derselben NRT-Verbindung unter Berücksichtigung der Spitzenbitrate PCR festgelegt.

Im Anschluß an die Ermittlung der Verzögerungszeiten $DNT_{BT}$ und $DNT_{CDV}$ in dem linken und mittleren Zweig des Flußdiagrammes wird zunächst der Wert LST auf den Wert der aktuellen Zeit T gesetzt und für eine nachfolgende Ermittlung festgehalten. Anschließend wird von den beiden Verzögerungszeiten $DNT_{BT}$ und $DNT_{CDV}$ die größere ausgewählt und daraus unter Berücksichtigung der aktuellen Zeit T und der oben genannten Länge CLL eines Zeitrahmens und damit der Zeittabelle sowie der Länge eines Zeitschlitzes LCC derjenige Zeitschlitz $CSN_B$ ermittelt, zu dem frühestens die gerade vorliegende Nachrichtenzelle weiterzuleiten ist.

Darüber hinaus wird anhand der aktuellen Zeit T und des zuvor im linken Zweig des Flußdiagrammes an dem Punkt A ermittelten aktuellen Wertes für $L_s$ ein Zeitpunkt $VST_s := (L_s + T)$ ermittelt, zu dem spätestens die gerade vorliegende Nachrichtenzelle an die Abnehmerleitungsanordnung A1 weiterzuleiten ist, um den maximalen Abstand zweier aufeinanderfolgender Nachrichtenzellen derselben NRT-Verbindung kleiner oder gleich $T_{SCR}$ sicherzustellen. Von diesem Zeitpunkt und dem maximal in den Zeittabellen C1 und C2 darstellbaren Zeitpunkt( T+CLL-LCC ) wird der kleinere Wert ausgewählt und daraus unter Berücksichtigung der aktuellen Zeit T und der oben genannten Länge CLL eines Zeitrahmens und damit der Zeittabelle sowie der Länge eines Zeitschlitzes LCC derjenige Zeitschlitz $CSN_E$ ermittelt, zu dem spätestens die gerade vorliegende Nachrichtenzelle weiterzuleiten ist.

Damit ist die Ermittlung eines Zeitintervalls für die Weiterleitung einer Nachrichtenzelle abgeschlossen und es sind lediglich noch in der oben angegebenen Weise Einträge in die Ausleselisten der Zeittabellen C1 und C2 vorzunehmen.

Das in Fig.4 dargestellte Flußdiagramm entspricht im wesentlichen dem in Fig.3 wiedergebenen Flußdiagramm. Bei diesem wird davon ausgegangen, daß die oben genannten Zeittabellen und damit die Modulo-m-Zähleinrichtung eine kurze Periode aufweisen und in einem festgelegten Zeitschlitz (RCS) dieser Periode die Leaky-Bucket-Parameter einer der Zellen-Warteschlangen im Zuge eines "Refreshs" aktualisiert werden.

Mit der Ermittlung des Zeitschlitzes $CSN_B$ (Fig.3) wird zusätzlich durch Division der Verzögerungszeit $DNT_p$ durch die Länge CLL der Zeittabellen die Anzahl $CCW_B$ der Perioden ermittelt, die für die Realisierung der Verzögerungszeit erforderlich sind. Bei einem Wert $CCW_B$ = "0" wird der Zeitschlitz $CSN_B$ sofort berücksichtigt. Anderenfalls wird der Wert $CCW_B$ zusammen mit dem ermittelten Zeitschlitz $CSN_B$ und den übrigen Leaky-Bucket-Parametern für die jeweilige NRT-Verbindung in der Speichereinrichtung SP gespeichert.

In entsprechender Weise wird mit der Ermittlung des Zeitschlitzes $CSN_E$ (Fig.3) zusätzlich durch Division des Wertes $L_s$ durch die Länge CLL der Zeitabellen C1 und C2 die Anzahl der Perioden ermittelt, die für die Realisierung der Verzögerungszeit $CSN_E$ erforderlich sind. Bei einem Wert $CCW_E$ = "0" wird der Zeitschlitz $CSN_E$ sofort berücksichtigt. Andernfalls wird der Wert $CCW_E$ ebenfalls zusammen mit dem ermittelten Zeitschlitz $CSN_E$ und den übrigen Leaky-Bucket-Parametern für die jeweilige NRT-Verbindung in der Speichereinrichtung SP gespeichert.

Die gespeicherten Werte für $CCW_B$ und $CCW_E$ werden jeweils mit jedem "Refresh" um den Wert "1" dekrementiert. Erst bei einem Wert "0" werden dann die zuvor ermittelten Zeitschlitze $CSN_B$ und $CSN_E$ in den Zeittabellen C1 und C2 berücksichtigt. Diese Vorgehensweise bringt den Vorteil mit sich, daß die Länge der Zeittabellen minimiert werden kann.

Abschließend sei noch bezüglich der anhand der Flußdiagramme in den Fig. 3 und 4 erläuterten Steuerungsabläufe darauf hingewiesen, daß mit diesen eine Weiterleitung von Nachrichtenzellen einer NRT-Verbindung unter Berücksichtigung der festgelegten Spitzenbitrate (PCR), der Obergrenze der mittleren Bitrate (SCR), der Bursttolerenz (BT) und der Zellen-Verzögerunstoleranz (CDV) sichergestellt ist. Falls jedoch für eine solche Weiterleitung lediglich ein Teil dieser Parameter sicherzustellen ist, brauchen lediglich die dafür relevanten Steuerungsabläufe in den Flußdiagrammen herangezogen werden.

**Patentansprüche**

1. Verfahren zum Weiterleiten von über eine nach einem asynchronen Transfermodus arbeitende ATM-Kommunikationseinrichtung (KE) im Zuge virtueller Verbindungen übertragenen Nachrichtenzellen an eine für die jeweilige virtuelle Verbindung in Frage kommende Abnehmerleitung (A1,...,An), wobei für die jeweilige virtuelle Verbindung im Zuge des Verbindungsaufbaus entsprechend der Verkehrscharakteristik des zu übertragenden Nachrichtenzellenstromes charakteristische Parameter festgelegt werden und nach Maßgabe dieser charakteristischen Parameter zu jeder über die ATM-Kommunikationseinrichtung übertragenen Nachrichtenzelle für deren Weiterleitung an die in Frage kommende Abnehmerleitung ein Zeitintervall ermittelt wird,
**dadurch gekennzeichnet,**
daß das Zeitintervall für die jeweilige Nachrichtenzelle erst mit der Weiterleitung einer dieser unmittelbar vorangehenden Nachrichtenzelle derselben virtuellen Verbindung ermittelt wird.

2. Verfahren nach Anspruch 1,
**dadurch gekennzeichnet,**
daß als charakteristische Parameter für die einzelnen virtuellen Verbindungen jeweils eine Spitzenbitrate (PCR), eine Obergrenze der mittleren Bitrate (SCR), eine Burst-Toleranz (BT) sowie eine Zellen-Verzögerungstoleranz (CDV) festgelegt werden und daß einerseits nach Maßgabe der Spitzenbitrate, der Bursttoleranz sowie der Zellen-Verzögerungstoleranz der Anfangs-Zeitpunkt des Zeitintervalls und andererseits nach Maßgabe der Obergrenze der mittleren Bitrate der End-Zeitpunkt des Zeitintervalls ermittelt wird.

3. Verfahren nach Anspruch 2,
**dadurch gekennzeichnet,**
daß für jede virtuelle Verbindung ein den letzten Bearbeitungszeitpunkt einer Nachrichtenzelle angebender Zeitwert LST, ein erster, der Obergrenze der mittleren Bitrate (SCR) und der Bursttolerenz (BT) zugeordneter "Leaky-Bucket"-Parametersatz (LB1) sowie ein zweiter, der Spitzenbitrate (PCR) und der Zellen-Verzögerungstoleranz (CDV) zugeordneter "Leaky-Bucket"-Parametersatz (LB2) geführt werden, daß der erste "Leaky-Bucket"-Parametersatz als Parameter einen momentanen Füllstandswert $L_s$ des "Leaky-Buckets", einen von der Bursttoleranz abhängigen Maximalwert $S_s$ des "Leaky-Buckets"

sowie einen Zeitwert $T_{SCR}$ enthält, welcher dem zeitlichen Abstand zweier aufeinanderfolgender Nachrichtenzellen unter Berücksichtigung der Obergrenze der mittleren Bitrate (SCR) entspricht, daß der zweite "Leaky-Bucket"-Parametersatz als Parameter einen momentanen Füllstandswert $L_p$ des "Leaky-Buckets", einen von der Zellen Verzögerungstolereanz (CDV) abhängigen Maximalwert $S_p$ des "Leaky-Buckets" sowie einen Zeitwert $T_{PCR}$ enthält, welcher dem zeitlichen Abstand zweier aufeinander folgender Nachrichtenzellen unter Berücksichtigung der Spitzenbitrate (PCR) entspricht, daß zur Ermittlung des Zeitintervalls für die Weiterleitung einer Nachrichtenzelle zum Zeitpunkt T der Weiterleitung der unmittelbar vorangehenden Nachrichtenzelle der Füllstandswert $L_s$ auf den Wert $L_s := L_s - (T - LST)$ dekrementiert, der daraus resultierende Wert auf $L_s := L_s + T_{SCR}$ als den aktuellen Füllstandswert inkrementiert und anschließend ein Verzögerungswert $DNT_{BT} := L_s - S_s$ gebildet wird, daß der Füllstandswert $L_p$ auf den Wert $L_p := L_p - (T - LST)$ dekrementiert, der daraus resultierende Wert auf $L_p := L_p + T_{PCR}$ als den aktuellen Füllstandswert inkrementiert und anschließend ein Verzögerungswert $DNT_{CDV} := L_p - S_p$ gebildet wird, daß der Zeitwert LST auf den Wert T für eine nachfolgende Ermittlung gesetzt und der größere der Verzögerungswerte $DNT_{BT}$ und $DNT_{CDV}$ als Anfangspunkt des Zeitintervalls ausgewählt wird und daß der Endzeitpunkt des Zeitintervalls aus dem aktuellen Füllstandswert $L_s + T$ ermittelt wird.

4. Verfahren nach einem der Ansprüche 1 bis 3,
**dadurch gekennzeichnet,**
daß die im Zuge von virtuellen Verbindungen weiterzuleitenden Nachrichtenzellen verbindungsindividuelle Zellen-Warteschlangen durchlaufen, daß für jede nicht leere Zellen-Warteschlangen lediglich eine Referenz geführt wird und daß zu der jeweiligen Referenz das Zeitintervall bestimmt wird, in welchem die in der zugehörigen Zellen-Warteschlange als nächste für eine Weiterleitung anstehende Nachrichtenzelle auszulesen ist.

5. Verfahren nach Anspruch 4,
**dadurch gekennzeichnet,**
daß für die Weiterleitung der Nachrichtenzellen zwei Zeittabellen (C1, C2) geführt sind, die jeweils eine festgelegte zeitliche Länge (CLL) sowie eine Mehrzahl von Zeitschlitzen aufweisen, deren zeitliche Länge (LCC) der Übertragungszeit einer Nachrichtenzelle auf der jeweiligen Abnehmerleitung (A1,...,An) entspricht, daß eine erste der Zeittabellen (C1) den Anfangszeitpunkten von Zeitintervallen, die zweite Zeittabellen dagegen den Endzeitpunkten von Zeitintervallen zugeordnet ist,

daß die Referenz auf die jeweilige Zellen-Warteschlange nach Maßgabe des Anfangszeitpunktes und des Endzeitpunktes des zu dieser ermittelten Zeitintervalls jeweils in eine Ausleseliste eines für den betreffenden Anfangszeitpunkt bzw. Endzeitpunkt in Frage kommenden Zeitschlitz der ersten bzw. zweiten Zeittabelle (C1, C2) eingetragen wird und daß die jeweilige Referenz je nach der aktuellen Verkehrslast in der Ausleseliste der ersten oder der zweiten Zeittabelle berücksichtigt wird.

6. Verfahren nach Anspruch 1,
   **dadurch gekennzeichnet,**
   daß für die Ermittlung des Anfangs-Zeitpunktes und des End-Zeitpunktes eines Zeitintervalls einer Nachrichtenzelle für jede virtuelle Verbindung zwei gesonderte "Leaky-Bucket"-Parametersätze geführt werden,
   daß für die Anfangs-Zeitpunkte und die End-Zeitpunkte von Zeitintervallen zwei gesonderte, jeweils zeitgleich mit einer einheitlich festgelegten Periode umlaufende Zeittabellen (C1, C2) mit jeweils einer festgelegten Anzahl von Zeitschlitzen geführt werden,
   daß die beiden "Leaky-Bucket"-Parametersätze für die jeweilige virtuelle Verbindung in einem festgelegten Zeitschlitz aktualisiert werden,
   daß bei der Ermittlung eines Zeitintervalls die auf den Anfangs-Zeitpunkt und den End-Zeitpunkt jeweils entfallende Perioden-Anzahl der Zeittabellen bestimmt wird und entsprechende Zählwerte verbindungsindividuell festgehalten werden,
   daß mit jedem Aktualisieren der "Leaky-Bucket"-Parametersätze für die jeweilige Verbindung die festgehaltenen Zählwerte jeweils um den Wert "1" dekrementiert werden
   und daß lediglich bei einem Zählwert "0" der zuvor ermittelte Anfangs-Zeitpunkt bzw. End-Zeitpunkt in der zugehörigen Zeittabelle berücksichtigt wird.

7. Schaltungsanordnung zum Weiterleiten von über eine nach einem asynchronen Transfermodus arbeitende ATM-Kommunikationseinrichtung (KE) im Zuge virtueller Verbindungen übertragenen Nachrichtenzellen an eine für die jeweilige virtuelle Verbindung in Frage kommende Abnehmerleitung (A1,...,An),
   wobei für die jeweilige virtuelle Verbindung im Zuge des Verbindungsaufbaus entsprechend der Verkehrscharakteristik des zu übertragenden Nachrichtenzellenstrom charakteristische Parameter durch die ATM-Kommunikationseinrichtung (KE) festgelegt werden und durch eine der jeweiligen Abnehmerleitung zugeordnete Behandlungseinrichtung (BHE) nach Maßgabe dieser von der ATM-Kommunikationseinrichtung (KE) her zugeführten charakteristischen Parameter zu jeder an diese abgegebenen Nachrichtenzelle für deren Weiterleitung an die zugeordnete Abnehmerleitung ein Zeitintervall ermittelt wird,
**dadurch gekennzeichnet,**
daß die Behandlungseinrichtung (BHE) Bearbeitungsmittel (SCH) aufweist, die derart ausgebildet sind, daß das Zeitintervall für die jeweilige Nachrichtenzelle erst mit der Weiterleitung einer dieser unmittelbar vorangehenden Nachrichtenzelle derselben virtuellen Verbindung ermittelt wird.

FIG 1

FIG 2

EP 0 730 362 A2

Weiterleiten einer
Zelle zur Zeit T

$L_S := L_S - (T - LST)$

$L_P := L_P - (T - LST)$

YES — $L_S < 0$

YES — $L_P < 0$

$L_S := 0$

$L_P := 0$

(A)

$L_S := L_S + T_{SCR}$

$L_P := L_P + T_{PCR}$

$DNT_{BT} := L_S - S_S$

$DNT_{CDV} := L_P - S_P$

$LST := T$

$DNT_P := max(0, DNT_{BT}, DNT_{CDV})$

(A)

$VST_S := L_S + T$

$VST_S := min(VST_S, T + CLL - LCC)$

$$CSN_B := \frac{(T + DNT_P) \bmod CLL}{LCC}$$

$$CSN_E := \frac{VST_S \bmod CLL}{LCC}$$

Anfangspunkt
des Zeitintervals

Endpunkt
des Zeitintervals

FIG 3

EP 0 730 362 A2

FIG 4

Weiterleiten einer Zelle zur Zeit T

$L_S := L_S - (T - LST)$

$L_P := L_P - (T - LST)$

$CCW_B := INTERGER\left(\dfrac{DNT_P}{CLL}\right)$

Ⓐ

$VST_S := L_S + T$

$CCW_E := INTERGER\left(\dfrac{L_S}{CLL}\right)$

YES — $L_S < 0$

YES — $L_P < 0$

$L_S := 0$

$L_P := 0$

Ⓐ

$CSN_B := \dfrac{(T + DNT_P)\,mod\ CLL}{LCC}$

$CSN_E := \dfrac{VST_S\,mod\ CLL}{LCC}$

$L_S := L_S + T_{SCR}$

$L_P := L_P + T_{PCR}$

$CCW_E := max(0, CCW_E - 1)$ ← YES — $CSN_E < RCS$

$DNT_{BT} := L_S - S_S$

$DNT_{CDV} := L_P - S_P$

$CSN_B < RCS$ — YES → $CCW_B := max(0, CCW_B - 1)$

$LST := T$

$DNT_P := max(0, DNT_{BT}, DNT_{CDV})$

Anfangspunkt des Zeitintervals

Endpunkt des Zeitintervals